# EUROPÄISCHE PATENTSCHRIFT

(11) **EP 2 882 145 B1**
(45) Veröffentlichungstag und Bekanntmachung des Hinweises auf die Patenterteilung: **01.03.2017**
(21) Anmeldenummer: 14196479.1
(22) Anmeldetag: 06.03.2009
(51) Int. Cl.: H04L 12/40, H04L 29/06, H04L 12/46

(54) **Verfahren und Filteranordnung zum Speichern von Informationen über einen seriellen Datenbus eines Kommunikationsnetzwerks eingehender Nachrichten in einem Teilnehmer des Netzwerks**
Method and filter assembly for buffering information about incoming messages transmitted over a serial bus of a communication network in a node of the network
Procédé et agencement de filtre destinés à stocker des informations rélies aux messages entrantes à l'aide d'un bus de données en série d'un réseau de communication dans un noeud du réseau

(30) Priorität: 10.03.2008 DE 102008000583
(43) Veröffentlichungstag der Anmeldung: 10.06.2015
(62) Teilanmeldung aus: 09719565.5
(73) Patentinhaber: ROBERT BOSCH GMBH, 70442 Stuttgart (DE)
(72) Erfinder: Hartwich, Florian, 72762 Reutlingen (DE); Bailer, Franz, 72116 Moessingen (DE); Horst, Christian, 72144 Dusslingen (DE)

(56) Entgegenhaltungen:
- WO-A1-2007/009942
- GB-A- 2 347 309
- US-A1- 2008 065 719

## Beschreibung

### Stand der Technik

Die vorliegende Erfindung betrifft ein Verfahren zum Filtern von über einen seriellen Datenbus eines Kommunikationsnetzwerks in einem Kommunikations-Modul eines an den Datenbus angeschlossenen Teilnehmers eingehenden Nachrichten mittels einer Filteranordnung. Dabei weisen die Nachrichten jeweils eine Kennung zur Identifikation auf. Die Eigenschaften der Filteranordnung werden durch in mindestens einer Liste der Filteranordnung abgelegte Kennungen von Nachrichten definiert.

Die Erfindung betrifft außerdem eine Filteranordnung für ein Kommunikations-Modul eines an einen seriellen Datenbus eines Kommunikationsnetzwerks angeschlossenen Teilnehmers, zur Ausführung des genannten Verfahrens.

Aus dem Stand der Technik sind Kommunikationsnetzwerke bekannt, in denen Nachrichten gemäß seriellen Kommunikationsprotokollen (z.B. Controller Area Network (CAN), FlexRay, Local Interconnect Network (LIN), Media Oriented Systems Transport (MOST)) übertragen werden. Die Netzwerke umfassen mindestens einen Datenbus, an den mehrere Teilnehmerknoten angeschlossen sind. Es ist ferner bekannt, in diesen Kommunikationsnetzwerken nicht alle über den Datenbus gesendeten Nachrichten von allen an den Datenbus angeschlossenen Teilnehmerknoten zu verwenden. Die Teilnehmerknoten umfassen jeweils ein Kommunikations-Modul und eine Applikation. Um die Host-Applikation in den Teilnehmerknoten zu entlasten, werden von vielen Kommunikations-Modulen nur die Nachrichten an die Applikation weitergegeben, die auch in der Applikation verwendet werden. Die Nachrichten werden dabei anhand ihrer numerischen Kennung (sog. Identifier) erkannt. Dieses Verfahren wird als Akzeptanz-Filterung bezeichnet. Die bekannten Verfahren zur Akzeptanz-Filterung umfassen Listen mit Identifiern, die durchgelassen werden sollen (sog. Akzeptanz-Codesy. Teile der Identifier können für die Filterung ausgeblendet werden, so dass jeder Listen-Eintrag für eine Gruppe von Identifiern stehen kann (sog. Akzeptanz-Maske). Dabei können jeweils n Bit des Identifiers mittels einer Maske ausgeblendet werden, so dass der Identifier für eine Gruppe von 2ⁿ Identifiern steht. Das bekannte Verfahren kann durch Listen von Identifiern variiert werden, die nicht akzeptiert, also gesperrt werden sollen. Diese Listen sind per Software konfigurierbar.

Die Patentanmeldung WO 2007/009942 A1 offenbart eine Filtereinrichtung, welche in einem CAN-System zwischen CAN-Busteilnehmern und den Busleitungen eingesetzt werden kann.
Die Patentanmeldung GB 2 347 309 A offenbart ein Datenauswertesystem, welches Identifizierer in empfangenen Daten mit abgespeicherten Identifizierer-Informationen vergleicht und abhängig vom Vergleichsergebnis die Daten weiterbehandelt.
Die Patentanmeldung US 2008/065719 A1 offenbart ein computerimplementiertes Verfahrens zur Verwaltung von Nachrichten, die von der Applikation zurückgewiesenen wurden.

Wenn eine Applikation Nachrichten aus einem breiten Spektrum von Identifier verwendet, kann es vorkommen, dass die Filter-Möglichkeiten des Hardware Kommunikations-Moduls nicht ausreichen, alle notwendigen Nachrichten durchzulassen und gleichzeitig alle überflüssigen Nachrichten zu sperren. Dann muss die Applikations-Software für die restliche Akzeptanz-Filterung Rechenleistung der Recheneinheit (z.B. Central Processing Unit; CPU) des Teilnehmerknotens aufwenden. Zudem sind andere Größen der durch die Akzeptanz-Masken definierten Gruppen nur durch Überlagerung möglich, indem mehrere Listen-Einträge gleichzeitig betrachtet und kombiniert werden. Das erfordert jedoch Zeit und Hardware-Ressourcen. Ein weiterer Nachteil der Filterung mittels Akzeptanz-Codes und Akzeptanz-Masken ist die Gefahr, dass erwünschte Nachrichten versehentlich zurückgewiesen werden. Um dies zu verhindern wird die Akzeptanz-Maske üblicherweise sehr weit geöffnet, was zur Folge hat, dass auch solche Nachrichten akzeptiert werden, die von der Applikation eigentlich gar nicht verwendet werden. Eine zusätzliche Belastung der Applikations-Software (häufiges Bedienen des FIFOs zum Abholen der Nachricht, Filtern der Nachricht, etc.) ist die Folge.

### Offenbarung der Erfindung

Ausgehend von dem beschriebenen Stand der Technik, liegt der vorliegenden Erfindung die Aufgabe zu Grunde, eine Akzeptanz-Filterung mit einer großen Zahl an Filterkriterien mit möglichst wenig Aufwand zu realisieren.

Zur Lösung dieser Aufgabe wird ausgehend von dem Filterverfahren der eingangs genannten Art vorgeschlagen, dass in der mindestens einen Liste der Filteranordnung mehrere Kennungspaare abgelegt sind, durch die jeweils ein durch eine erste Kennung und eine zweite Kennung begrenzter Bereich definiert wird, dass die Kennung einer eingehenden Nachricht zumindest mit ausgewählten Kennungspaaren verglichen wird und abgefragt wird, ob die Kennung der eingehenden Nachricht größer oder größer gleich als die ausgewählte erste Kennung und kleiner oder kleiner gleich als die ausgewählte zweite Kennung ist, und dass die eingehende Nachricht an die Applikation weitergeleitet oder zurückgewiesen wird, falls die Kennung der eingehenden Nachricht in dem durch die erste Kennung und die zweite Kennung begrenzten Bereich liegt.

Das erfindungsgemäße Filterverfahren verwendet also nicht eine Liste mit einzelnen Kennungen (Identifiern) mit optionalen Akzeptanz-Masken, sondern eine Liste von Identifier-Paaren. Das vorgeschlagene Verfahren definiert ein Identifier-Paar als einen Bandpass (sog. Acceptance-Filter) oder als eine Bandsperre (sog. Rejection-Filter). Alle Identifier von empfangenen Nachrichten, deren Zahlenwerte numerisch zwischen den beiden Zahlenwerten (der ersten und zweiten Kennung) des Kennungspaares liegen, werden akzeptiert (Bandpass) oder zurückgewiesen bzw. verworfen (Bandsperre). Es können sequentiell mehrere Identifier-Paare betrachtet werden, so lange bis ein passendes Paar gefunden oder bis das Ende der Liste erreicht ist.

Der Vorteil des erfindungsgemäßen Bereichsfilters (sog. Range-Filters) liegt darin, dass die Identifier-Paare unabhängig voneinander betrachtet werden können und dass die Breite der Filterbereiche beliebig definiert werden kann. Die Filteranordnung ist vorzugsweise in Hardware implementiert. Die Identifier-Paare werden vorzugsweise beginnend bei einem bestimmten Identifier-Paar, insbesondere beginnend am Anfang der Liste, sequentiell betrachtet. Das hat den Vorteil, dass die Steuerung des Filterverfahrens und der Zugriff auf die Listeninhalte einfach und ressourcensparend ausgebildet ist und dass die Identifier-Paare in einem Speicher mit wahlfreiem Zugriff (z.B. Random Access Memory; RAM), aber auch in einem Festwertspeicher (Read Only Memory; ROM und Abwandlungen davon (PROM, EPROM, EEPROM)) abgelegt werden können und nicht in (Flip-Flop-) Registern implementiert werden müssen.

Vorteilhafte Ausgestaltungen der Erfindung können den Unteransprüchen entnommen werden und werden nachfolgend anhand der Figuren näher erläutert. Es zeigen:
- Figur 1: ein Beispiel für ein Kommunikationsnetzwerk mit Teilnehmerknoten, die über eine erfindungsgemäße Filteranordnung verfügen;
- Figur 2: ein Beispiel für ein Ablaufdiagramm eines erfindungsgemäßen Filterverfahrens;
- Figur 3: ein Beispiel für ein Filterelement einer Liste der erfindungsgemäßen Filteranordnung für 11-Bit-Kennungen von CAN-Nachrichten;
- Figur 4: ein Beispiel für ein Filterelement einer Liste der erfindungsgemäßen Filteranordnung für 29-Bit-Kennungen von CAN-Nachrichten;
- Figur 5: ein Beispiel für ein Ablaufdiagramm mit zusätzlichen Verfahrensschritten eines erfindungsgemäßen Filterverfahrens; und
- Figur 6: eine detailliertere Darstellung eines Teilnehmerknotens aus Figur 1.

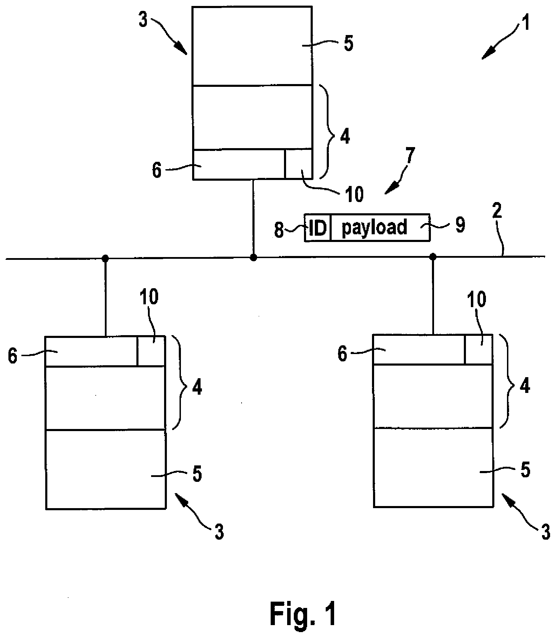

In Figur 1 ist ein erfindungsgemäßes Kommunikationsnetzwerk in seiner Gesamtheit mit dem Bezugszeichen 1 bezeichnet. Das Netzwerk 1 umfasst einen Datenbus 2, der symbolisch durch eine einzige Linie dargestellt ist. An den Datenbus 2 sind mehrere Teilnehmerknoten 3 angeschlossen, von denen in Figur 1 beispielhaft lediglich drei dargestellt sind. Jeder Knoten 3 ist über ein Kommunikations-Modul 4 an den Datenbus 2 angeschlossen. Die Knoten 3 verfügen außerdem über eine Host-Applikation 5.

Über den Datenbus 2 können Nachrichten 7 nach einem seriellen Kommunikationsprotokoll (z.B. CAN, FlexRay, LIN, MOST u.a.) übertragen werden. Das Kommunikations-Modul 4 ist für den Empfang und das Versenden von Nachrichten 7 über den Datenbus 2 zuständig. Da nicht alle über den Bus 2 gesendeten Nachrichten 7 von allen an den Bus 2 angeschlossenen Knoten 3 verwendet werden, verfügen die Kommunikations-Module 4 über eine Filteranordnung 6. Die Filteranordnung 6 lässt nur diejenigen Nachrichten 7 zu der Applikation 5 durch, die für den jeweiligen Knoten 3 bestimmt sind und in der Applikation 5 des Knotens 3 auch wirklich verwendet werden.

Die Nachrichten 7 verfügen jeweils über eine Kennung 8 (sog. Identifier), welche eine eindeutige Identifikation der Nachrichten 7 ermöglicht. Bei CAN ist die Kennung 8 bspw. eine Art Absender-Adresse, welche die Ermittlung des Ursprungs der Nachricht 7 erlaubt und den Inhalt der Nachricht 7 kennzeichnet. Neben der Kennung 8 verfügen die Nachrichten 7 auch über einen Nutzdatenteil 9 (sog. Payload). Das von der Filteranordnung 6 ausgeführte Filterverfahren wird auch als Akzeptanz-Filterung bezeichnet.

Die vorliegende Erfindung betrifft eine Weiterbildung der Filteranordnung 6, so dass eine besonders große Anzahl an Filterkriterien mit relativ wenig Aufwand implementiert werden kann. Die Akzeptanz-Filterung beginnt zu arbeiten, wenn eine neue Nachricht 7 empfangen worden ist. Der Identifier 8 der empfangenen Nachricht 7 (ein Zahlenwert) wird mit einer Liste von konfigurierten Identifier-Paaren verglichen, um zu entscheiden, ob die empfangene Nachricht 7 an die Applikations-Software 5 weitergeleitet wird, oder ob die Nachricht 7 verworfen wird.

Die Implementierung erfolgt vorzugsweise in Hardware. Ein wesentlicher Aspekt der Erfindung betrifft mindestens eine Liste, die in einem Speicherelement 10 der Filteranordnung 6 abgespeichert ist. Das Speicherelement 10 ist vorzugsweise als ein Speicher mit wahlfreiem Zugriff (z.B. RAM) oder als ein Festwertspeicher (z.B. Flash-Speicher, ROM, EEPROM) ausgebildet. Die mindestens eine Liste umfasst bspw. 128 Einträge mit jeweils 32 Bit Breite. Selbstverständlich kann die Liste auch eine größere oder kleiner Zahl an Einträgen (z.B. 256 oder 64) oder Einträge mit einer größeren oder kleineren Breite (z.B. 64 oder 16 Bit) aufweisen. Eine Wortbreite von 64 Bit hätte den Vorteil, dass z.B. für Extended 29-Bit-CAN-Identifier ein Identifier-Paar samt Konfigurationsbits in einem Datenwort untergebracht werden könnte, so dass beide Identifier des Identifier-Paars mit einem einzigen Lesevorgang eingelesen werden könnten.

In der Liste sind mehrere Identifier-Paare abgelegt, durch die jeweils ein durch eine erste Kennung ID1 und eine zweite Kennung ID2 begrenzter Bereich definiert wird. Die Kennung 8 einer eingehenden Nachricht 7 wird beginnend bei einem bestimmten Identifier-Paar aus der Liste, vorzugsweise dem ersten Listeneintrag, so lange nacheinander mit Identifier-Paaren aus der Liste verglichen, bis ein durch ein Identifier-Paar definierter Bereich gefunden wurde, in dem die Kennung 8 der Nachricht 7 liegt. In diesem Fall wird die eingehende Nachricht 7 dann - je nach Konfiguration - entweder an die Applikation 5 weitergeleitet oder zurückgewiesen. Die Identifier-Paare aus der Liste werden vorzugsweise sequentiell mit der Kennung 8 der eingehenden Nachricht 7 verglichen. Falls kein durch ein Identifier-Paar definierter Bereich in der Liste gefunden werden kann, in dem die Kennung 8 der Nachricht 7 liegt, kann die eingehende Nachricht 7 - je nach Konfiguration - entweder an die Applikation 5 weitergeleitet oder zurückgewiesen werden.

Der Vorteil des Verfahrens liegt darin, dass die Identifier-Paare unabhängig voneinander sequentiell betrachtet werden können und dass die Breite ihrer Filter-Bereiche beliebig konfiguriert werden kann. Da die Identifier-Paare sequentiell betrachtet werden, können sie in einem Speicher mit wahlfreiem Zugriff oder in einem Festwertspeicher abgelegt werden und müssen nicht in Flip-Flop-Registern implementiert werden. Das erlaubt eine einfache und kostengünstige Realisierung der Erfindung.

Bei der vorliegenden Erfindung liegen die Vergleichs-Identifier als eine Liste von Identifier-Paaren vor, die in einem Speicherelement 10 abgelegt sind. Der Speicher 10 ist typischerweise als RAM implementiert, für spezielle Anwendungen sind auch nicht-flüchtige Speicher (NVRAM, Flash-Speicher, FeRAM, MRAM, PCRAM) möglich. Die Anzahl von Identifier-Paaren ist frei einstellbar. Für jedes Identifier-Paar ist festgelegt, ob es als Bandpass (sog. Acceptance-Filter) oder als Bandsperre (sog. Rejection-Filter) wirkt. Die beiden Zahlenwerte eines Identifier-Paares dürfen identisch sein, das Identifier-Paar wirkt dann nur auf eine bestimmte Nachricht. Die Akzeptanz-Filter 6 bzw. der Inhalt der mindestens einen Filterliste und die empfangenen Nachrichten können in dem gleichen Speicher abgelegt werden, die Aufteilung des Speicherplatzes zwischen Filtern und Nachrichten kann konfiguriert werden.

Der Speicherbereich, der für ein Identifier-Paar benötigt wird, hängt von dem Kommunikations-Protokoll ab. Für 11-Bit-CAN-Identifier kann ein Identifier-Paar in einem z.B. 32-Bit Datenwort untergebracht werden. Für 29-Bit-CAN-Identifier kann ein Identifier-Paar in z.B. zwei 32-Bit Datenworten untergebracht werden, jeweils mit Konfigurations-Bits, die bspw. festlegen, ob das Paar als Bandpass oder als Bandsperre wirkt. Um in manchen Anwendungen Speicherplatz zu sparen, können optional in der Liste Identifier-Paare, deren beiden Zahlenwerte identisch sind, durch Einzel-Identifier ersetzt werden. In CAN-Anwendungen können getrennte Listen für Data-Frames und für Remote-Frames sowie für 11-Bit-Identifier und für 29-Bit-Identifier vorgesehen sein. Das vorgeschlagene Akzeptanz-Filter-Verfahren kann auch mit Masken kombiniert werden, die Teile der Identifier für die Filterung ausblenden. Außerdem ist es denkbar, das vorgeschlagene Bereichs-Filter (Range-Filter)-Verfahren mit anderen bekannten Filterverfahren zu kombinieren. Denkbar wäre bspw. eine Kombination mit einem sog. Classic Filter, bei dem die Kennung 8 der eingehenden Nachricht 7 mit mindesten einer Akzeptanz-Kennungen (sog. Acceptance Code) und/oder mit mindestens einer Akzeptanz-Masken (sog. Acceptance Mask) verglichen wird. Vorzugsweise wird eine in der Liste enthaltene erste Kennung als Akzeptanz-Kennung und eine in der Liste enthaltene entsprechende zweite Kennung als Akzeptanz-Maske herangezogen. Auch eine Kombination des vorgeschlagenen Range-Filter-Verfahrens mit einem sog. Dual ID Filter wäre denkbar. Dabei werden beide in der Liste abgespeicherten Kennungen mit der Kennung 8 der empfangenen Nachricht 7 verglichen.

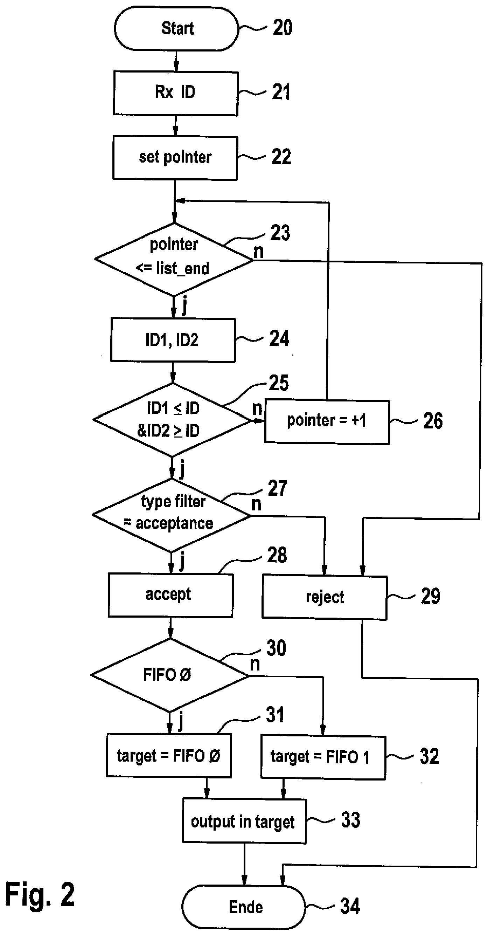

Nachfolgend wird das erfindungsgemäße Verfahren anhand des Ablaufdiagramms aus Figur 2 näher erläutert. Das Verfahren beginnt in einem Funktionsblock 20. Die Akzeptanz-Filterung beginnt zu arbeiten, wenn eine neue Nachricht 7 empfangen worden ist. Anschließend wird in einem Funktionsblock 21 die Kennung (ID) 8 einer eingehenden Nachricht 7 eingelesen. In einem Funktionsblock 22 wird ein Zeiger (sog. Pointer) auf eine bestimmte Stelle in der Liste gesetzt, vorzugsweise auf das erste Identifier-Paar am Anfang der Liste. Das Filter-Schaltwerk bekommt als Eingangs-Parameter den Identifier 8 der empfangenen Nachricht 7, den Zeiger auf die Liste von Identifier-Paaren und die Anzahl der Listeneinträge (Größe der Liste). In einem Abfrageblock 23 wird überprüft, ob sich der Zeiger noch innerhalb der Liste befindet.

Falls ja, liest das Schaltwerk in einem Funktionsblock 24 ein erstes Identifier-Paar von der Liste und prüft in einem Abfrageblock 25, ob der Zahlenwert des empfangenen Identifiers 8 in dem von dem Identifier-Paar definierten Bereich liegt. Falls nein, wird in einem Funktionsblock 26 der Zeiger um "1" erhöht und zu dem Abfrageblock 23 verzweigt. Beim nachfolgenden Durchlauf wird das nächste Identifier-Paar aus der Liste ausgelesen und mit dem Identifier 8 der anliegenden Nachricht 7 verglichen. Diese Schleife wird so lange durchlaufen, bis das Ende der Liste erreicht ist ("nein" am Abfrageblock 23) oder bis ein "match" vorliegt, das heißt bis der Zahlenwert des empfangenen Identifiers 8 in dem von dem Identifier-Paar definierten Bereich liegt ("ja" am Abfrageblock 25).

Falls ein "match" vorliegt, wird in einen Abfrageblock 27 verzweigt, wo ermittelt wird, ob das aktuelle Identifier-Paar als Bandpass (Acceptance) wirken soll. Falls ja, wird in einem Funktionsblock 28 festgelegt, dass die eingehende Nachricht 7 akzeptiert werden soll. Falls nein, wird in einem Funktionsblock 29 festgelegt, dass die eingehende Nachricht 7 zurückgewiesen werden soll. Informationen darüber, ob das Identifier-Paar als ein Bandpass oder als eine Bandsperre wirken soll, können ebenfalls in der Liste in Form eines Konfigurationsbits SFM (Standard Filter Mode) abgespeichert sein.

Auch in dem Fall, dass das Ende der Liste erreicht ist, ohne dass ein "match" vorliegt, das heißt keine passenden Identifier-Paare in der Liste gefunden wurden, wird in dem dargestellten Ausführungsbeispiel in den Funktionsblock 29 verzweigt. Was in diesem Fall passiert, kann vorab konfiguriert werden. Es könnte auch konfiguriert werden, dass in dem Fall, dass keine passenden Identifier-Paare in der Liste gefunden wurden, die anliegende Nachricht 7 akzeptiert wird. In diesem Fall müsste dann von dem Abzweig "nein" des Abfrageblocks 23 zu dem Funktionsblock 28 verzweigt werden.

Vom Funktionsblock 28 aus wird in einen weiteren Abfrageblock 30 verzweigt, wo überprüft wird, ob die eingehende Nachricht 7 in einem ersten Zwischenspeicher FIFO0 abgelegt werden soll, von wo aus die Applikation 5 sich die Nachricht 7 dann abholen kann. So ist es bspw. denkbar, die Nachricht 7 in einem unterschiedlichen Zwischenspeicher abzulegen, in Abhängigkeit davon, ob die Nachricht 7 wichtig oder unwichtig, zeitkritisch oder weniger zeitkritisch, oder im Falle eines Gateways für Kanal A oder für Kanal B bestimmt ist. Informationen darüber, in welchen Zwischenspeicher die Nachricht 7 abzulegen ist, können ebenfalls in der Liste in Form eines Konfigurationsbits SFFS (Standard Filter FIFO Select) abgespeichert sein. In einem Funktionsblock 31 wird dann festgelegt, dass die Nachricht 7 in dem ersten Zwischenspeicher FIFO0 abgespeichert wird. Falls die Nachricht 7 nicht im Zwischenspeicher FIFO0 abgelegt werden soll, wird in einen Funktionsblock 32 verzweigt, wo festgelegt wird, dass die Nachricht 7 in dem zweiten Zwischenspeicher FIFO1 abgespeichert wird, von wo aus die Applikation 5 sich die Nachricht 7 dann abholen kann. Die vorliegende Erfindung ist jedoch nicht auf lediglich zwei Zwischenspeicher FIFO0 und FIFO1 beschränkt. Bei einem Einsatz der Erfindung in einem Gateway mit mehreren Kanälen kann es bspw. sinnvoll sein, mehr als zwei Zwischenspeicher FIFO0, FIFO1 zu haben. Eine größere Zahl von FIFOs mit einer Tiefe von 1 wäre dann ein sog. Full-CAN.

In einem Funktionsblock 33 wird dann die eingehenden Nachricht 7 in dem ausgewählten Zwischenspeicher FIFO0 oder FIFO1 abgelegt. Dann wird das Verfahren in einem Funktionsblock 34 beendet. Das Verfahren wird auch dann beendet, wenn die anstehende Nachricht zurückgewiesen werden soll (Funktionsblock 29).

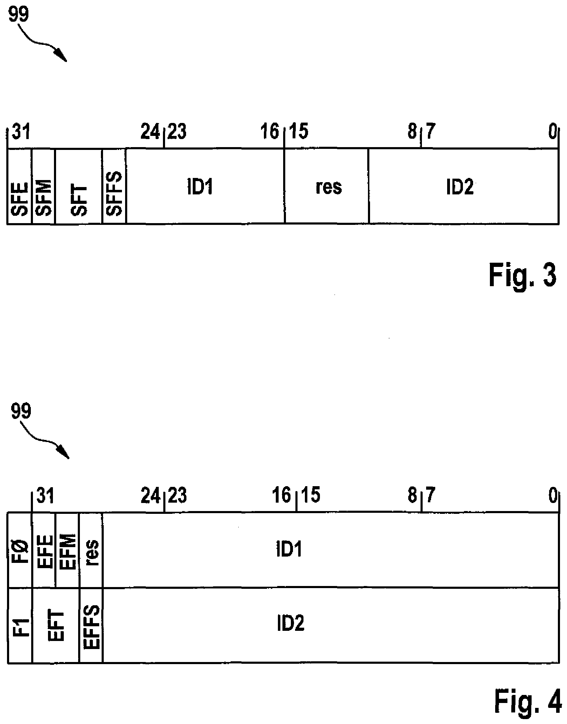

Anhand der Figur 3 wird beispielhaft ein möglicher Aufbau eines 32-Bit Datenworts des Speicherelements 10 für einen Standard 11-Bit-CAN-Identifier gezeigt. Das Bit 31 umfasst ein Konfigurationsbit SFE (Standard Filter Enable). Alle aktiven Filterelemente werden für die Akzeptanz-Filterung von Standard Datenrahmen benutzt. Der Wert "0" des Bits 31 besagt, dass der Filter inaktiv ist, und der Wert "1" besagt, dass der Filter aktiv ist. Bit 30 umfasst ein Konfigurationsbit SFM (Standard Filter Mode). Der Wert "0" des Bits 30 besagt, dass die anliegende Nachricht 7 akzeptiert wird, falls die Filterung einen "match" ergibt, und der Wert "1" besagt, dass die anliegende Nachricht verworfen wird, falls die Filterung einen "match" ergibt.

Die Bits 29 und 28 umfassen Konfigurationsbits SFT (Standard Filter Type). Der Wert "00" der Bits 29 und 28 besagt, dass das Filterelement einen Range-Filter im Bereich von der ersten Kennung ID1 bis zu der zweiten Kennung ID2 umfasst. Der Wert "01" besagt, dass das Filterelement einen Dual ID Filter für die erste Kennung ID1 und die zweite Kennung ID2 umfasst. Der Wert "10" besagt, dass das Filterelement einen Classic Filter umfasst, wobei die erste Kennung ID1 einen Akzeptanz-Code und die zweite Kennung ID2 eine Akzeptanz-Maske darstellt. Der Wert "11" ist reserviert, bspw. für zukünftige Erweiterungen des Verfahrens.

Das Bit 27 umfasst ein Konfigurationsbit SFFS (Standard Filter FIFO Select). Der Wert "0" des Bits 27 besagt, dass eine akzeptierte Nachricht 7 in einem ersten Zwischenspeicher FIFO0 abgespeichert wird, und der Wert "1" besagt, dass eine akzeptierte Nachricht 7 in einem zweiten Zwischenspeicher FIFO1 abgespeichert wird. Die elf Bits 26 bis 16 umfassen die Standard Filter Kennung ID1, und die elf Bits 10 bis 0 umfassen die Standard Filter Kennung ID2. Die Bits 11 bis 15 sind reserviert.

Anhand der Figur 4 wird beispielhaft ein möglicher Aufbau von zwei 32-Bit Datenworten des Speicherelements 10 für einen Extended 29-Bit-CAN-Identifier gezeigt. Das Bit 31 des ersten Datenworts F0 umfasst ein Konfigurationsbit EFE (Extended Filter Enable). Alle aktiven Filterelemente werden für die Akzeptanz-Filterung von Extended Datenrahmen benutzt. Der Wert "0" des Bits 31 besagt, dass der Filter inaktiv ist, und der Wert "1" besagt, dass der Filter aktiv ist. Bit 30 des ersten Datenworts umfasst ein Konfigurationsbit EFM (Extended Filter Mode). Der Wert "0" des Bits 30 besagt, dass die anliegende Nachricht 7 akzeptiert wird, falls die Filterung einen "match" ergibt, und der Wert "1" besagt, dass die anliegende Nachricht verworfen wird, falls die Filterung einen "match" ergibt. Das Bit 29 des ersten Datenworts ist reserviert.

Die Bits 31 und 30 des zweiten Datenworts F1 umfassen Konfigurationsbits EFT (Extended Filter Type). Der Wert "00" der Bits 31 und 30 besagt, dass das Filterelement einen Range-Filter im Bereich von der ersten Kennung ID1 bis zu der zweiten Kennung ID2 umfasst. Der Wert "01" besagt, dass das Filterelement einen Dual ID Filter für die erste Kennung ID1 und die zweite Kennung ID2 umfasst. Der Wert "10" besagt, dass das Filterelement einen Classic Filter umfasst, wobei die erste Kennung ID1 einen Akzeptanz-Code und die zweite Kennung ID2 eine Akzeptanz-Maske darstellt. Der Wert "11" ist reserviert, bspw. für zukünftige Erweiterungen des Verfahrens. Das Bit 29 des zweiten Datenworts umfasst ein Konfigurationsbit EFFS (Extended Filter FIFO Select). Der Wert "0" des Bits 29 besagt, dass eine akzeptierte Nachricht 7 in einem ersten Zwischenspeicher FIFO0 abgespeichert wird, und der Wert "1" besagt, dass eine akzeptierte Nachricht 7 in einem zweiten Zwischenspeicher FIFO1 abgespeichert wird.

Die 29 Bits 28 bis 0 des ersten Datenworts umfassen die Extended Filter Kennung ID1, und die 29 Bits 28 bis 0 des zweiten Datenworts umfassen die Extended Filter Kennung ID2.

Das erfindungsgemäße Verfahren eignet sich insbesondere für einen Einsatz in einem Gateway. Dabei kommt vorzugsweise ein sogenannter Basic-CAN-Controller mit einem oder mehreren FIFOs zum Einsatz. Das Gateway ist an verschiedene Datenbusse 2 von verschiedenen Netzwerken 1 angeschlossen. Es dient zum Übertragen von Nachrichten von einem ersten Datenbus 2 eines ersten Netzwerks 1 an einen zweiten Datenbus 2 eines zweiten Netzwerks 1. Durch die erfindungsgemäße Filterung von Nachrichten kann die Gateway-Software entscheidend entlastet werden. Im Zusammenhang mit einem Gateway kommt auch ein entscheidender Vorteil der Erfindung besonders zum Tragen. Ein Gateway muss - anders als viele normale Teilnehmerknoten 3 - eine große Anzahl an in einem Netzwerk 1 übertragenen Nachrichten 7 verarbeiten, das heißt weiterleiten können. Aus diesem Grund fallen bei einem Gateway besonders viele Filterkriterien an, die mit der vorliegenden Erfindung mit geringem Aufwand in Hardware implementiert werden können. Zudem erlaubt die vorliegende Erfindung eine besonders schnelle, effiziente und ressourcenschonende Durchführung der Filterung der eingehenden Nachrichten. Das erfindungsgemäße Verfahren lässt sich auch für so genannte Full-CAN-Controller anwenden, indem zusätzliche Konfigurations-Bits der Filterelemente nicht nur zwischen zwei FIFOs unterscheiden, sondern auch bestimmte Nachrichten in für diese Nachrichten reservierte Speicher (so genannte "dedicated Message Buffer") einsortieren.

Das oben beschriebene Verfahren lässt sich in zwei grundlegende Schritte unterteilen. Zunächst wird anhand zu den einzelnen Filterelementen 99 gehöriger Kennungspaare überprüft, ob die eingegangene Nachricht zu einem der Filterelemente 99 passt. Zum Überprüfen, ob die eingegangene Nachricht auf das Filterelement 99 passt, können, wie oben beschrieben, außer den Kennungspaaren der einzelnen Filterelemente 99 auch die in den Filterelementen 99 abgelegten Konfigurationsbits SFT beziehungsweise EFT herangezogen werden, um in der oben beschriebenen Weise festzulegen, welcher Filtertyp (Range-Filter, Dual-ID-Filter oder Classic-Filter) zum Überprüfen, ob ein Treffer vorliegt, zugrunde liegen soll. Sobald in der Liste ein Filterelement 99 gefunden wurde, das zur eingegangenen Nachricht passt, wird der erste grundlegende Schritt abgeschlossen.

Anschließend wird in einem zweiten grundlegenden Schritt anhand von Steuerbits des gefundenen Filterelements 99, wie beispielsweise das Mode-Bit (SFM beziehungsweise EFM) und das Bit SFFS beziehungsweise EFFS zum Auswählen des Zwischenspeichers FIFO0 beziehungsweise FIFO1, festgelegt, wie mit der eingegangenen Nachricht verfahren werden soll.

Die erstgenannten Konfigurationsbits spezifizieren also einen Anwendungsbereich der einzelnen in den Filterelementen 99 abgelegten Filterregeln, wohingegen die Steuerbits die Verfahrensweise derjenigen Nachrichten 7 spezifiziert, die in den Anwendungsbereich dieser Filterregel fallen.

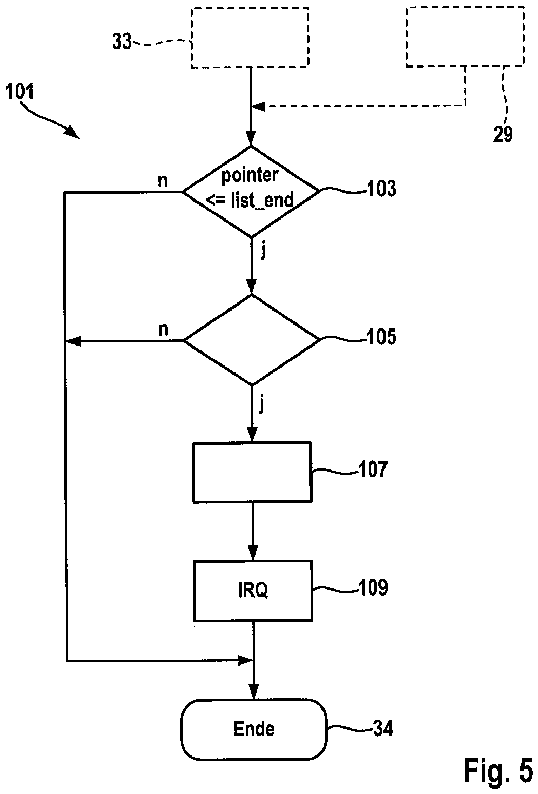

Im Folgenden wird anhand der Figur 5 eine Ausführungsform des erfindungsgemäßen Verfahrens erläutert, bei dem zusätzlich zu den in den anderen Ausführungsformen möglichen Verfahrensweisen, nämlich Speichern der Nachricht 7 in einem bestimmten Zwischenspeicher FIFO0, FIFO1 oder Verwerfen der Nachricht 7, eine weitere Verfahrensweise vorgesehen ist, nämlich Speichern von Informationen über die eingegangene Nachricht 7. Das Speichern der Informationen über die eingegangene Nachricht 7 ist unabhängig von dem Speichern der Nachricht 7 in einem der Zwischenspeicher FIFO0, FIFO1. Die Informationen über die eingegangene Nachricht 7 können auch dann gespeichert werden, wenn die Nachricht 7 selbst nicht in einem der Zwischenspeicher FIFO0, FIFO1 abgelegt werden soll oder (beispielsweise wegen Speicherplatzmangels) nicht in einen der Zwischenspeicher FIFO0, FIFO1 abgelegt werden kann.

Diese zusätzliche Verfahrensweise kann beispielsweise mittels in der Figur 5 gezeigter zusätzlicher Verfahrensschritte 101 realisiert werden. Die zusätzlichen Verfahrensschritte 101 werden vorzugsweise unmittelbar vor dem in Figur 2 eingezeichneten Ende 34 des Verfahrens ausgeführt. Das heißt die zusätzlichen Verfahrensschritte 101 werden vorzugsweise nach dem Schritt 29 und nach dem Schritt 33 ausgeführt.

Da die Informationen über die eingegangene Nachricht 7 nur für den Fall gespeichert werden sollen, dass ein passendes Filterelement 99 gefunden worden ist, wird zunächst in einer Verzweigung 103 überprüft, ob der Zeiger noch auf einen Bereich innerhalb der Liste zeigt. Ist dies der Fall (j), dann werden in einer weiteren Verzweigung 105 zusätzliche Steuerinformationen - im Folgenden als Speichersteuerinformationen bezeichnet - überprüft, um festzustellen, ob Informationen über die eingegangene Nachricht 7 gespeichert werden sollen. Andernfalls (n) wird zum Schritt 34 verzweigt. Als Speichersteuerinformationen können in dem gefundenen Filterelement 99 abgelegte Informationen überprüft werden. Beispielsweise können die zusätzlichen Steuerinformationen ein Bit innerhalb des in der Figur 3 oder in der Figur 4 gezeigten Filterelements 99 umfassen oder durch ein solches Bit gebildet sein. Beispielsweise kann eines der in den Figuren 3 oder 4 mit "res" als reserviert gekennzeichneten Bits überprüft werden, um festzustellen, ob Informationen über die eingegangene Nachricht 7 gespeichert werden sollen. Durch die Speichersteuerinformationen wird also eine zusätzliche Option in die Filterelemente 99 eingeführt, die es erlaubt, Informationen über eingehende Nachrichten 7 mit einer bestimmten Kennung zu speichern.

Ergibt die Überprüfung der Speichersteuerinformationen im Schritt 105, dass die Informationen über die eingehende Nachricht 7 gespeichert werden sollen, dann wird mit einem Schritt 107 fortgefahren (j), andernfalls (n) wird zum Schritt 34 verzweigt, um das Verfahren zu beenden.

Im Schritt 107 werden die Informationen über die eingegangene Nachricht 7 gespeichert. Diese Informationen können das gefundene Filterelement 99 angeben, welches auf die eingegangene Nachricht 7 passt. Beispielsweise kann einfach der in den Figuren als "pointer" bezeichnete Zeiger gespeichert werden. Des Weiteren kann gespeichert werden, ob und in welchem Zwischenspeicher FIFO0, FIFO1 die eingegangene Nachricht 7 im vorangegangenen Schritt 33 abgespeichert wurde. Um direkt auf die abgespeicherte Nachricht 7 zugreifen zu können, kann vorgesehen werden, dass gespeichert wird, an welcher Stelle innerhalb des entsprechenden Zwischenspeichers FIFO0, FIFO1 die eingegangene Nachricht 7 abgespeichert wurde. Ferner kann gespeichert werden, ob die eingegangene Nachricht 7 deshalb nicht abgespeichert wurde, weil in dem entsprechenden Zwischenspeicher FIFO0, FIFO1 kein Speicherplatz mehr frei war. Schließlich kann gespeichert werden, ob ein Abspeichern überhaupt nicht vorgesehen war, beispielsweise weil die Bits SFM beziehungsweise EFM gefundenen Filterelements 99 entsprechend gesetzt ist.

Anschließend wird in einem Schritt 109 eine Unterbrechungsanforderung (Interrupt Request IRQ) generiert, um der Applikation 5 zu signalisieren, dass die oben genannten Informationen über die eingegangene Nachricht 7 gespeichert worden sind. Die Applikation 5 kann dann die gespeicherten Informationen abrufen und gegebenenfalls die Nachricht 7 aus dem Zwischenspeicher FIFO0, FIFO1 auslesen. In einer nicht gezeigten Ausführungsform ist der Schritt 109 nicht vorgesehen, und das Verfahren erzeugt keine Unterbrechungsanforderung.

Schließlich wird das Verfahren im Schritt 34 beendet.

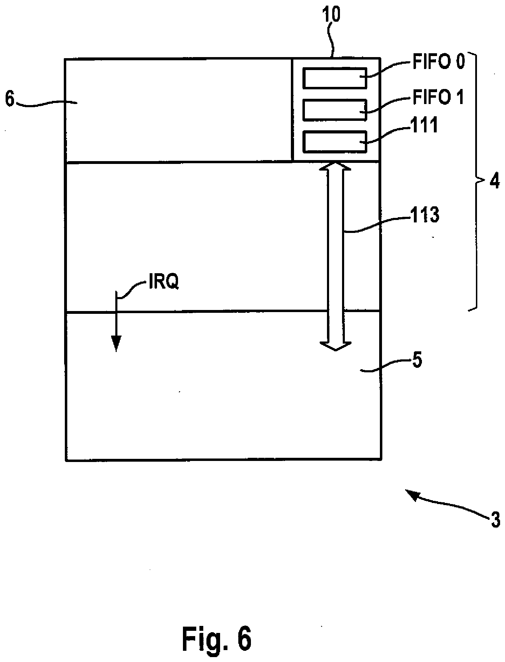

Figur 6 zeigt eine etwas detailliertere Darstellung eines Teilnehmerknotens 3. Das Speicherelement 10 ist vorzugsweise als flüchtiger Speicher mit wahlfreiem Zugriff (RAM) ausgebildet. Einzelne Speicherbereiche des Speicherelements 10 dienen zum Ablegen der Daten des ersten Zwischenspeichers FIFO0 und des zweiten Zwischenspeichers FIFO1. Darüber hinaus ist ein weiterer, gesonderter Speicherbereich vorgesehen, der eine Registeranordnung 111 bildet, in welche bei Ausführung des Schritts 107 die Informationen über die eingegangene Nachricht 7 gespeichert werden.

Abweichend von der gezeigten Ausführungsform kann die Registeranordnung 111 nicht als ein Speicherbereich eines RAM, sondern auch als ein spezielles Register des Kommunikationsmoduls 4 oder als ein spezieller Registersatz des Kommunikationsmoduls 4 ausgebildet werden. Die beiden Zwischenspeicher FIFO0 und FIFO1 werden von der Filteranordnung 6 als FIFO-Speicher organisiert. Hierzu kann in der Filteranordnung 6 für jeden Zwischenspeicher FIFO0, FIFO1 jeweils einen Schreibzeiger aufweisen, der angibt an welche Adresse innerhalb des Speicherelements 10 in den Zwischenspeicher FIFO0, FIFO1 zu schreibende Nachrichten 7 kopiert werden sollen. Ferner kann in der Filteranordnung 6 für jeden Zwischenspeicher FIFO0, FIFO1 jeweils ein Lesezeiger vorgesehen sein, der angibt an welcher Adresse innerhalb des Speicherelements 10 die nach dem FIFO-Prinzip jeweils auszulesende Nachricht 7 steht.

Die Applikation 5 hat über eine Schnittstelle 113 wahlfreien Zugriff auf einzelne Worte innerhalb des Speicherelements 10, so dass sie bei Bedarf auf beliebige in den beiden Zwischenspeichern FIFO0 und FIFO1 befindlichen Nachrichten 7 zugreifen kann, auch wenn sie nach dem FIFO-Prinzip noch nicht aus den Zwischenspeichern FIFO0 beziehungsweise FIFO1 ausgelesen werden sollten. Auf diese Weise kann die Applikation 5 anhand der in der Registeranordnung 111 abgelegten Informationen, insbesondere der Information, die angibt an welcher Stelle die entsprechende Nachricht 7 innerhalb des entsprechenden Zwischenspeichers FIFO0 beziehungsweise FIFO1 abgespeichert ist, unabhängig von dem FIFO-Prinzip sofort auf die eingegangene Nachricht 7 zugreifen, ohne zuerst die vorher in den Zwischenspeicher FIFO0, FIFO1 abgelegten Nachrichten 7 auslesen zu müssen. Werden Filterelemente 99 in die Liste eingefügt, die dafür sorgen, dass Informationen über besonders dringende Nachrichten 7 in der Registeranordnung 111 abgelegt werden, dann kann die Anwendung 5 besonders schnell auf diese Nachrichten 7 reagieren, weil die Anwendung diese Nachricht 7 vor den vorher bereits in den Zwischenspeichern FIFO0 beziehungsweise FIFO1 abgelegten Nachrichten 7 verarbeiten kann. Dies kann beispielsweise durch eine geeignete Interrupt-Service-Routine innerhalb der Applikation 5 bewerkstelligt werden.

In einer nicht gezeigten Ausführungsform sind die beiden Zwischenspeicher FIFO0 und FIFO1 nicht mittels eines RAMs sondern mit spezieller Hardware realisiert. Die mit spezieller Hardware realisierten Zwischenspeicher sind derart ausgebildet, dass die Applikation 5 abweichend vom FIFO-Prinzip beliebige Nachrichten 7 aus diesen Zwischenspeichern auslesen kann.

Die eingegangenen Nachrichten 7, für die keine Informationen gespeichert worden sind, liest die Applikation 5 aus den Zwischenspeichern FIFO0, FIFO1 nach dem FIFO-Prinzip aus. Hierbei kann die Applikation 5 in regelmäßigen Zeitabständen die Zwischenspeicher FIFO0, FIFO1 abfragen. Alternativ oder ergänzend hierzu kann vorgesehen werden, dass vorzugsweise vom Kommunikationsmodul 4, eine weitere Unterbrechungsanforderung generiert wird, wenn mindestens ein Zwischenspeicher FIFO0, FIFO1 oder ein bestimmter Zwischenspeicher FIFO0, FIFO1 einen bestimmten Füllstand erreicht hat, sodass die Applikation 5 unterbrechungsgesteuert auf die Zwischenspeicher FIFO0, FIFO1 zugreifen kann.

Insgesamt erlaubt das Verfahren aufgrund der verwendeten FIFO-Strategie eine relativ einfache Verarbeitung von Nachrichten 7, die sehr viele unterschiedliche Kennungen aufweisen, und gleichzeitig werden durch das Speichern von Informationen über bestimmte, vorzugsweise über besonders dringende Nachrichten 7 (beispielsweise Alarm-Nachrichten), die Nachteile von Kommunikationsmodulen 4 mit FIFO-Zwischenspeicher vermieden, da für die dringende Nachrichten 7 die FIFO-Strategie nicht zwingend angewendet werden muss. Bei Realisierung des Verfahrens können somit die Vorteile von FIFObasierten Kommunikationsmodulen 4 mit Vorteilen von Kommunikationsmodulen 4, die sogenannte "Dedicated Buffer" verwenden, miteinander kombiniert werden.

## Patentansprüche

1. Verfahren zum Speichern von Informationen von über einen seriellen Datenbus (2) eines Kommunikationsnetzwerks (1) in einem Kommunikations-Modul (4) eines an den Datenbus (2) angeschlossenen Teilnehmers (3) eingehenden Nachrichten (7), welche mittels einer Filteranordnung (6) gefiltert werden, wobei die Nachrichten (7) jeweils eine Kennung (8) zur Identifikation aufweisen und die Eigenschaften der Filteranordnung (6) durch in mindestens einer Liste der Filteranordnung (6) abgelegte Kennungen von Nachrichten (7) definiert werden,
**dadurch gekennzeichnet, dass** die Liste als Listenelemente ein oder mehrere Filterelemente (99) aufweist, die Speichersteuerinformationen enthalten, und dass anhand der Speichersteuerinformationen überprüft (105) wird, ob Informationen über eine eingehende N achricht (7) gespeichert werden sollen, und Informationen über eine eingehende Nachricht (7) gespeichert (107) werden, falls das Überprüfen (105) ergeben hat, dass die Informationen gespeichert werden sollen.

2. Verfahren nach Anspruch 1,
**dadurch gekennzeichnet, dass** in jedem Filterelement (99) ein Kennungspaar (ID1, ID2) enthalten ist und dass die Informationen über die eingehenden Nachricht (7) nur dann gespeichert werden, wenn die Kennungen (8) der eingehenden Nachrichten (7) innerhalb des durch das Kennungspaar (ID1, ID2) definierten Bereichs liegt.

3. Verfahren nach Anspruch 1 oder 2,
**dadurch gekennzeichnet, dass** Informationen darüber gespeichert (107) werden, ob und an welchem Speicherort (FIFO0, FIFO1) die Nachricht (7) gespeichert wurde und darüber, ob die Nachricht (7) wegen Speicherplatzmangels nicht abgespeichert wurde.

4. Verfahren nach einem der Ansprüche 1 bis 3,
**dadurch gekennzeichnet, dass** als Informationen über den Speicherort Informationen darüber gespeichert (107) werden, in welchem Zwischenspeicher (FIFO0, FIXO1) die Nachricht (7) abgespeichert wurde.

5. Verfahren nach einem der Ansprüche 1 bis 3,
**dadurch gekennzeichnet, dass** als Informationen über den Speicherort Informationen darüber gespeichert (107) werden, an welcher Stelle innerhalb des entsprechenden Zwischenspeichers (FIFO0, FiFO1) die Nachricht (7) abgespeichert wurde.

6. Verfahren nach einem der Ansprüche 1 bis 5,
**dadurch gekennzeichnet, dass**, falls die Informationen gespeichert (107) werden, die Applikation (5) benachrichtigt (109) wird.

7. Verfahren nach Anspruch 6,
**dadurch gekennzeichnet, dass** die Applikation (5) benachrichtigt (109) wird, nachdem die Informationen gespeichert (107) worden sind.

8. Verfahren nach einem der Ansprüche 6 bis 7,
**dadurch gekennzeichnet, dass** die Applikation (5) mittels einer Unterbrechungsanforderung (IRQ) benachrichtigt (109) wird.

9. Verfahren nach einem der Ansprüche 1 bis 8,
**dadurch gekennzeichnet, dass** für die Speicherung der Informationen (107) ein separater Speicherbereich (111) innerhalb des Kommunikationsmoduls (4) vorgesehen ist.

10. Verfahren nach einem der Ansprüche 1 bis 9,
**dadurch gekennzeichnet, dass** die Applikation (5) über eine geeignete Schnittstelle (113) wahlfreien Zugriff auf einzelne Daten der innerhalb des Speicherelements (10) abgespeicherten Informationen hat.

11. Verfahren nach Anspruch 9,
**dadurch gekennzeichnet, dass** nach Speicherung der Informationen in dem separaten Speicherbereich (113) eine Unterbrechungsanforderung an die Applikation (5) generiert wird.

12. Verfahren nach einem der Ansprüche 1 bis 11,
**dadurch gekennzeichnet, dass** abhängig vom Füllstand der Zwischenspeicher (FIFO0, FIFO1) eine Unterbrechungsanforderung an die Applikation (5) generiert wird.

13. Verfahren nach einem der Ansprüche 1 bis 12,
**dadurch gekennzeichnet, dass** in der mindestens einen Liste der Filteranordnung (6) mehrere Kennungspaare (ID1, ID2) abgelegt sind, durch die jeweils ein durch eine erste Kennung (ID1) und eine zweite Kennung (ID2) begrenzter Bereich definiert wird und die Kennung (8) einer eingehenden Nachricht (7) zumindest mit ausgewählten Kennungspaaren (ID1, ID2) verglichen wird und abgefragt wird, ob die Kennung (8) der eingehenden Nachricht (7) größer oder größer gleich als die ausgewählte erste Kennung (ID1) und kleiner oder kleiner gleich als die ausgewählte zweite Kennung (ID2) ist und abhängig vom Ergebnis dieser Prüfung die eingehende Nachricht weitergeleitet oder zurückgewiesen wird.

14. Filteranordnung (6),
**dadurch gekennzeichnet, dass** die Filteranordnung (6) zum Ausführen des Verfahrens nach einem der Ansprüche 1 bis 13 eingerichtet ist.

## Claims

1. Method for storing information from messages (7) incoming via a serial data bus (2) of a communication network (1) in a communication module (4) of a subscriber (3) connected to the data bus (2) that are filtered by means of a filter arrangement (6), wherein the messages (7) have a respective identifier (8) for identification and the properties of the filter arrangement (6) are defined by identifiers of messages (7), which identifiers are stored in at least one list of the filter arrangement (6), **characterized in that** the list has, as list elements, one or more filter elements (99) that contain memory control information, and **in that** the memory control information is taken as a basis for checking (105) whether information about an incoming message (7) needs to be stored, and information about an incoming message (7) is stored (107) if the checking (105) has revealed that the information needs to be stored.

2. Method according to Claim 1,
**characterized in that** each filter element (99) contains an identifier pair (ID1, ID2) and **in that** the information about the incoming message (7) is stored only if the identifiers (8) of the incoming messages (7) lies within the range defined by the identifier pair (ID1, ID2).

3. Method according to Claim 1 or 2,
**characterized in that** information is stored (107) about whether and at what memory location (FIFO0, FIFO1) the message (7) has been stored and about whether the message (7) has not been stored on account of a lack of memory space.

4. Method according to one of Claims 1 to 3,
**characterized in that** the information stored (107) about the memory location is information about which buffer store (FIFO0, FIFO1) the message (7) has been stored in.

5. Method according to one of Claims 1 to 3,
**characterized in that** the information stored (107) about the memory location is information about which location within the relevant buffer store
(FIFO0, FIFO1) the message (107) has been stored at.

6. Method according to one of Claims 1 to 5,
**characterized in that** if the information is stored (107), then the application (5) is notified (109).

7. Method according to Claim 6,
**characterized in that** the application (5) is notified (109) after the information has been stored (107).

8. Method according to either of Claims 6 and 7,
**characterized in that** the application (5) is notified (109) by means of an interrupt request (IRQ).

9. Method according to one of Claims 1 to 8,
**characterized in that** a separate memory area (111) within the communication module (4) is provided for storing the information (107).

10. Method according to one of Claims 1 to 9,
**characterized in that** the application (5) has random access, via a suitable interface (113), to individual data of the information stored within the memory element (10).

11. Method according to Claim 9,
**characterized in that** storage of the information in the separate memory area (113) is followed by an interrupt request to the application (5) being generated.

12. Method according to one of Claims 1 to 11,
**characterized in that** the fill level of the buffer stores (FIFO0, FIFO1) is taken as a basis for generating an interrupt request to the application (5).

13. Method according to one of Claims 1 to 12,
**characterized in that** the at least one list of the filter arrangement (6) stores multiple identifier pairs (ID1, ID2) that define a respective range delimited by a first identifier (ID1) and a second identifier (ID2), and the identifier (8) of an incoming message (7) is compared at least with selected identifier pairs (ID1, ID2) and a test is performed to determine whether the identifier (8) of the incoming message (7) is greater than or greater than or equal to the selected first identifier (ID1) and less than or less than or equal to the selected second identifier (ID2), and the result of this check is taken as a basis for forwarding or rejecting the incoming message.

14. Filter arrangement (6),
**characterized in that** the filter arrangement (6) is set up to carry out the method according to one of Claims 1 to 13.

## Revendications

1. Procédé de stockage d'informations de messages (7) entrants par l'intermédiaire d'un bus de données série (2) d'un réseau de communication (1) dans un module de communication (4) d'un abonné (3) raccordé au bus de données (2), lesquels messages sont filtrés au moyen d'un système de filtrage (6), dans lequel les messages (7) comportent respectivement un identifiant (8) permettant une identification et les propriétés du système de filtrage (6) sont définies dans des identifiants de messages (7) stockés dans au moins une liste du système de filtrage (6),
**caractérisé en ce que** la liste comporte, en tant qu'éléments de liste, un ou plusieurs éléments de filtrage (99) qui contiennent des informations de commande de mémoire, et **en ce qu'**il est vérifié (105) sur la base des informations de commande de mémoire si des informations concernant un message entrant (7) doivent avoir été stockées, et des informations concernant un message entrant (7) sont stockées (107) dans le cas où la vérification (105) a indiqué que les informations doivent être stockées.

2. Procédé selon la revendication 1, **caractérisé en ce qu'**une paire d'identifiants (ID1, ID2) sont contenus dans chaque élément de filtrage (99) et **en ce que** les informations concernant le message entrant (7) ne sont stockées que lorsque les identifiants (8) des messages entrants (7) se situe à l'intérieur de la plage définie par la paire d'identifiants (ID1, ID2).

3. Procédé selon la revendication 1 ou 2,
**caractérisé en ce que** des informations indiquant si et à quel emplacement de mémoire (FIFO0, FIFO1) le message (7) a été stocké et indiquant si le message (7) n'a pas été stocké en raison d'un manque de place dans la mémoire sont stockées (107).

4. Procédé selon l'une quelconque des revendications 1 à 3,
**caractérisé en ce que** des informations indiquant dans quelle mémoire tampon (FIFO0, FIFO1) le message (7) a été stocké sont stockées (107) en tant qu'informations concernant l'emplacement de stockage.

5. Procédé selon l'une quelconque des revendications 1 à 3,
**caractérisé en ce que** des informations indiquant à quel endroit à l'intérieur de la mémoire tampon correspondante (FIFO0, FIFO1) le message (7) a été stocké sont stockées (107) en tant qu'informations concernant l'emplacement de stockage.

6. Procédé selon l'une quelconque des revendications 1 à 5,
**caractérisé en ce que**, dans le cas où les, informations sont stockées (107), l'application (5) en est informée (109).

7. Procédé selon la revendication 6,
**caractérisé en ce que** l'application (5) est informée (109) après que les informations ont été stockées (107).

8. Procédé selon l'une quelconque des revendications 6 à 7,
**caractérisé en ce que** l'application (5) est informée (109) au moyen d'une demande d'interruption (IRQ).

9. Procédé selon l'une quelconque des revendications 1 à 8,
**caractérisé en ce que**, pour le stockage des informations (107), il est prévu une zone de mémoire séparée (111) à l'intérieur du module de communication (4).

10. Procédé selon l'une quelconque des revendications 1 à 9,
**caractérisé en ce que** l'application (5) accède aléatoirement par l'intermédiaire d'une interface appropriée (113) à des données individuelles des informations stockées dans l'élément de mémoire (10).

11. Procédé selon la revendication 9,
**caractérisé en ce que**, après le stockage des informations dans la zone de mémoire séparée (113), une demande d'interruption est générée pour l'application (5).

12. Procédé selon l'une quelconque des revendications 1 à 11,
**caractérisé en ce qu'**une demande d'interruption est générée pour l'application (5) en fonction de l'état de remplissage de la mémoire tampon (FIFO0, FIFO1).

13. Procédé selon l'une quelconque des revendications 1 à 12
**caractérisé en ce que** plusieurs paires d'identifiants (ID1, ID2), par l'intermédiaire desquelles une plage délimitée par un premier identifiant (ID1) et un second identifiant (ID2) est définie dans l'au moins une liste du système de filtrage (6), et **en ce que** l'identifiant d'un message entrant (7) est comparé au moins à des paires d'identifiants (ID1, ID2) sélectionnées et **en ce qu'**il est demandé si l'identifiant (8) du message entrant (7) est supérieur ou supérieur ou égal au premier identifiant (ID1) sélectionné et inférieur ou inférieur ou égal au second identifiant (ID2) sélectionné et, en fonction de cette vérification, le message entrant est transmis ou rejeté.

14. Système de filtrage (6),
**caractérisé en ce que** le système de filtrage (6) est conçu pour mettre en oeuvre le procédé selon l'une quelconque des revendications 1 à 13.
